# EUROPÄISCHE PATENTANMELDUNG

(11) **EP 3 447 039 A1**
(43) Veröffentlichungstag der Anmeldung: **27.02.2019**
(21) Anmeldenummer: 18183593.5
(22) Anmeldetag: 16.07.2018
(51) Int. Cl.: C04B 37/02, C04B 37/00

(54) **HOCHTEMPERATURBESTÄNDIGER KERAMIK-METALL-VERBUNDKÖRPER**

(30) Priorität: 24.08.2017 DE 202017105077 U
(71) Anmelder: AICHELIN Holding GmbH, 2340 Mödling (AT)
(72) Erfinder: Rakette, Roland, 09599 Freiberg (DE); Arnold, Jörg, 09112 Chemnitz (DE); Grämer, Tobias, 09599 Freiberg (DE)
(74) Vertreter: Witte, Weller & Partner Patentanwälte mbB

(57) **Zusammenfassung**

Es wird ein hochtemperaturbeständiger Keramik-Metall-Verbundkörper angegeben, insbesondere eine Brennerelektrode, insbesondere eine Zünd- und Überwachungselektrode, mit einem Metallstab (12), der mit einem Keramikstab (14) aus einer elektrisch leitenden Keramik verbunden ist, mit einem isolierenden Keramikkörper (16) in Form einer Keramikhülse, welche von einem Hohlraum durchsetzt ist, der einander zugewandte Enden (13, 15) des Metallstabes (12) und des Keramikstabes (14) zumindest teilweise umschließt, und mit einem elektrisch leitenden Material (18) zur Fixierung des Metallstabes (12) im Keramikkörper (16) und zur elektrisch leitenden Verbindung der Enden (13, 15) des Metallstabes (12) und des Keramikstabes (14), dadurch gekennzeichnet, dass das elektrisch leitende Material (18) bei einer Betriebstemperatur im Bereich von 900°C bis 1000°C, insbesondere von 950°C bis 1000°C, insbesondere bei 950°C erweicht ist, vorzugsweise einen pastösen Zustand aufweist (Fig. 1).

## Beschreibung

Die Erfindung betrifft einen hochtemperaturbeständigen Keramik-Metall-Verbundkörper, insbesondere eine Brennerelektrode, insbesondere eine Zünd- und Überwachungselektrode, mit einem Metallstab, der mit einem Keramikstab aus einer elektrisch leitenden Keramik verbunden ist, mit einem isolierenden Keramikkörper in Form einer Keramikhülse, welche von einem Hohlraum durchsetzt ist, der einander zugewandte Enden des Metallstabes und des Keramikstabes zumindest teilweise umschließt, und mit einem elektrisch leitenden Material zur Fixierung des Metallstabes im Keramikkörper und zur elektrisch leitenden Verbindung der Enden des Metallstabes und des Keramikstabes.

Ein derartiger hochtemperaturbeständiger Keramik-Metall-Verbundkörper in Form einer lonisationselektrode zur Flammenüberwachung bzw. einer Zündelektrode bei einem Gas- oder Ölbrenner ist aus der DE 20 2004 006 644 U1 bekannt.

Bei dem bekannten Verbundkörper ist ein Keramikstab aus einer elektrisch leitenden Keramik zusammen mit einem Stahldraht innerhalb einer isolierenden Keramikhülse aufgenommen und mittels einer elektrisch leitfähigen Glasschmelze fixiert.

Auf diese Weise soll eine wegen der unterschiedlichen thermischen Ausdehnungskoeffizienten von Metall und Keramik schwierige Verbindung zwischen dem elektrisch leitfähigen Keramikstab, der die Elektrodenspitze bildet, und dem Metallstab bzw. -draht, der den elektrischen Anschlussschaft bildet, hergestellt werden. Problematisch ist bei dieser Ausführung die Fixierung des elektrisch leitfähigen Keramikstabes innerhalb der isolierenden Keramikhülse mithilfe eines elektrisch leitfähigen Glases. Eine solche Verbindung ist für Temperaturen im Bereich von etwa 600°C bis 700°C maximal geeignet, nicht jedoch für höhere Temperaturen im Bereich von 900°C bis 1000°C. Außerdem weist Glas eine schlechte Temperaturwechselbeständigkeit auf.

Aus der DE 32 00 738 A1 sind ein Verfahren zum Verbinden eines reaktionsgesinterten Werkstücks aus Siliziumkarbid mit einem Werkstück aus Eisen oder Metall sowie eine danach hergestellte lonisationselektrode bekannt, wobei ein Elektrodenstab aus Siliziumkarbid mithilfe eines Bindemittels aus Silizium und einem Metall befestigt wird. Das Bindemittel ist vorzugsweise eine eutektische Mischung aus Silizium und Eisen.

Auch eine derartige Verbindung ist nicht für hohe Betriebstemperaturen im Bereich von 900°C bis 1000°C geeignet. Außerdem ist eine gleichmäßige Dickenausbildung des Elektrodenstabes bzw. der Spitze nicht möglich, was für die Flammenüberwachung im "kalten Zustand" nachteilig ist.

Aus der DE 295 07 604 U1 ist eine Verbindung zwischen einer Stahlelektrode und einem Siliziumkarbid-Stab mittels einer Zugfeder bekannt, die unter Vorspannung auf den Keramikstab aufgedreht und mit der Stahlelektrode leitend verbunden wird. Die Federverbindung ist für eine Betriebstemperatur von 900°C bis 1000°C nicht geeignet, da die Federkraft bei einer solchen Temperatur nicht dauerhaft aufrechterhalten werden kann, sodass die mechanische Stabilität und der elektrische Kontakt leiden.

Eine Verlagerung der Feder in Bereichen mit niedriger Temperatur erfordert entweder lange keramische Elektrodenstäbe, die sehr bruchanfällig sind, oder einen Metall-Zwischenstab zwischen der Feder und dem keramischen Elektrodenstab. Hierbei ist nachteilig, dass zum Spannen der Feder und zum Drücken des Metallstabes gegen die keramische Elektrode eine Gegenlagerung der Elektrode vorhanden sein muss und somit keine einseitig eingespannte Version realisierbar ist. In diesem Fall ist die Kontaktstelle zwischen Metall und elektrisch leitfähigem Keramikstab eine Ursache für das Auftreten von Fehlerströmen durch chemisch induzierte Ströme (die Kontaktstelle wirkt als Thermoelement) an der Überwachungselektrode (Ionisation), was auch bei abgeschaltetem Brenner bei sehr hohen Temperaturen auftritt. Dies führt zu einer Störung des Brenners. Des Weiteren wirkt sich die Belegung der Kontaktoberfläche mit Oxidschichten bzw. eine dadurch bedingte Verringerung der elektrischen Leitfähigkeit nachteilig aus. Die Signale der lonisationsüberwachung werden dadurch so geschwächt, dass es zu einer Störabschaltung des Brenners kommen kann.

Aus der EP 1 089 039 A1 ist ferner eine Elektrode bekannt, die aus einem Verbundwerkstoff mit einer Siliziumkarbidmatrix besteht, die mit hochwarmfesten Fasern, insbesondere mit SiC-Fasern oder C-Fasern, verstärkt ist.

Die Herstellung einer solchen Elektrode ist sehr aufwendig und teuer.

Vor diesem Hintergrund liegt der Erfindung die Aufgabe zugrunde, auf möglichst kostengünstige Weise einen hochtemperaturbeständigen Keramik-Metall-Verbundkörper, der insbesondere als Brennerelektrode, insbesondere als Zünd- und Überwachungselektrode für Betriebstemperaturen im Bereich von 900°C bis 1000°C geeignet ist, anzugeben. Dabei soll eine dauerhafte mechanische und elektrische Verbindung geschaffen werden, und das Entstehen von Fremdströmen bei abgeschaltetem Brenner soll möglichst niedrig gehalten werden.

Diese Aufgabe wird bei einem Verbundkörper gemäß der eingangs genannten Art erfindungsgemäß dadurch gelöst, dass das elektrisch leitende Material bei einer Betriebstemperatur im Bereich von 900°C bis 1000°C, insbesondere von 950° bis 1000°C, insbesondere bei 950°C erweicht ist, vorzugsweise einen pastösen Zustand aufweist.

Die Aufgabe der Erfindung wird auf diese Weise vollkommen gelöst.

Da das elektrisch leitende Material, welches die Enden des Metallstabes und des elektrisch leitenden Keramikstabes elektrisch leitend miteinander verbindet, bei der Betriebstemperatur erweicht ist, werden durch unterschiedliche thermische Ausdehnungskoeffizienten bedingte Spannungen vermieden. Auf diese Weise kann eine dauerhafte elektrisch leitende und mechanisch beständige Verbindung zwischen dem Metallstab und dem Keramikstab bei einer Betriebstemperatur im Bereich von 900°C bis 1000°C gewährleistet werden.

Das elektrisch leitende Material weist bevorzugt einen elektrisch leitenden Metallzusatz auf, der aus der Gruppe ausgewählt ist, die aus Eisen, Gold, Kupfer, Nickel, Silber, Palladium, Platin, Mischungen und Legierungen hiervon besteht. Bevorzugt handelt es sich hierbei um einen elektrisch leitenden Metallzusatz aus Silber oder einer Silberlegierung.

Mit einem derartigen Metallzusatz lässt sich bei relativ geringen Kosten eine sehr gute elektrisch leitende Verbindung herstellen.

Vorzugsweise wird der Metallzusatz in Partikelform zugesetzt, vorzugsweise mit einer Partikelgröße D50<200 Mikrometer, weiter bevorzugt mit einer Partikelgröße D50<100 Mikrometer, weiter bevorzugt mit einer Partikelgröße D50<50 Mikrometer, besonders bevorzugt mit einer Partikelgröße D50<20 Mikrometer.

Mit einer derartigen Partikelgröße lässt sich eine sehr homogene Verteilung des Metallzusatzes im elektrisch leitenden Material gewährleisten und somit eine gute elektrische Leitfähigkeit.

Vorzugsweise weist das elektrisch leitende Material einen Metallzusatz von 1 Vol.-% bis 60 Vol.-% auf, vorzugsweise von 5 Vol.-% bis 30 Vol.-%

Mit einem derartigen Mischungsverhältnis lässt sich eine gute Volumenleitfähigkeit erzielen, die bevorzugt <10-2 Ωcm ist, vorzugsweise <10-3 Ωcm, besonders bevorzugt etwa 5 x 10-4 Ωcm bis 10-4 Ωcm.

Weiter bevorzugt ist das elektrisch leitende Material als anorganischer Kleber oder anorganisches Coating ausgebildet.

Hiermit lässt sich die gewünschte Eigenschaft der Erweichung im Bereich von 900°C bis 1000°C gewährleisten.

Bevorzugt weist das elektrisch leitende Material bei 950°C eine Viskosität von höchstens 1012 dPas auf, weiter bevorzugt von höchstens 1010 dPas, besonders bevorzugt von höchstens 108 dPas, wobei die Viskosität mindestens 102 dPas, weiter bevorzugt mindestens 103 dPas, besonders bevorzugt mindestens als 104 dPas beträgt.

Mit einem derartigen Viskositätsbereich kann die erwünschte Erweichung auf einen pastösen Zustand bei 950°C gewährleistet werden.

Die Keramikhülse, in der die Enden des Metallstabes und des Keramikstabes aufgenommen sind, besteht bevorzugt aus einer Aluminiumoxidkeramik, oder aus einer Zirkonoxidkeramik.

Gemäß einer weiteren Ausgestaltung der Erfindung füllt das elektrisch leitende Material einen Hohlraum im mittleren Bereich der Keramikhülse zwischen dem Ende des Metallstabes und dem Ende des Keramikstabes aus, wobei zwischen der Keramikhülse und dem Metallstab und dem Keramikstab an beiden Enden verbleibende Spalte mittels eines anorganischen Materials verschlossen sind.

Auf diese Weise wird einerseits eine sichere dauerhafte elektrische Verbindung zwischen dem Metallstab und dem Keramikstab gewährleistet und andererseits wird ein Austreten des bei Betriebstemperatur erweichten elektrisch leitfähigen Materials im Bereich der beiden Enden vermieden.

Das zum Verschließen der Spalte verwendete anorganische Material ist bevorzugt ein anorganischer Kleber, der vorzugsweise zumindest bis 1300°C, vorzugsweise zumindest bis 1500°C, besonders bevorzugt zumindest bis 1600°C, temperaturbeständig ist.

Auf diese Weise wird ein dauerhafter, beständiger Verschluss der Spalte an beiden Enden gewährleistet.

Gemäß einer weiteren Ausgestaltung der Erfindung ist der Keramikstab und/oder der Metallstab im von der Keramikhülse umschlossenen Bereich zumindest teilweise mit Oberflächenstrukturen versehen, insbesondere mit Erhöhungen, Vertiefungen, Zacken, Spitzen, Noppen und/oder Hinterschneidungen versehen.

Auf diese Weise wird bei einer senkrechten Anordnung des Verbundkörpers, wenn dieser als Brennerelektrode verwendet wird, einem Herausfallen des Keramikstabes bei Betriebstemperatur entgegengewirkt.

Hierzu kann ferner das Ende des Metallstabes und/oder das Ende des Keramikstabes mit einer Erweiterung versehen sein, vorzugsweise mit einer sickenförmigen, konusförmigen oder stufenförmigen Erweiterung versehen sein.

Auch hierdurch wird einem Herausfallen des Keramikstabes entgegengewirkt.

Die betreffenden Oberflächenstrukturen oder Erweiterungen weisen bevorzugt in Radialrichtung eine Ausdehnung von 0,1 bis 2 mm, vorzugsweise von 0,5 bis 1,00 Millimeter auf.

Der elektrisch leitende Keramikstab besteht vorzugsweise aus einer Oxidkeramik, insbesondere aus der Gruppe der Siliziumkarbide.

Bei Si-SiC-Werkstoffe handelt es sich um hochtemperaturfeste Werkstoffe mit einer guten elektrischen Leitfähigkeit, die besonders zur Verwendung als Elektrodenstab bzw. Elektrodenspitze geeignet sind.

Der Metallstab besteht bevorzugt aus einer Heizleiterlegierung, vorzugsweise aus einer Eisen-Chrom-Aluminium-Legierung, bevorzugt aus einer ferritischen Legierung, die etwa 5,6 bis 6 Gew.-% Aluminium und 20 bis 24 Gew.-% Chrom, mit Rest Eisen, enthält.

Eine derartige Legierung, die von der Firma Sandvik unter dem Markennamen Kanthal® A-1 vertrieben wird, ist besonders für den elektrischen Anschluss an die aus der elektrisch leitfähigen Keramik bestehende Elektrode geeignet und weist eine hohe Korrosions- und Temperaturbeständigkeit auf. Es versteht sich jedoch, dass in Folge der erfindungsgemäßen Gestaltung der Metall-/Keramikverbindung auch einfachere, kostengünstigere Werkstoffe verwendet werden können.

Es versteht sich ferner, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Figur 1: einen Längsschnitt durch eine erste Ausführung eines erfindungsgemäßen hochtemperaturbeständigen Keramik-Metall-Verbundkörpers, wobei die Darstellung nicht notwendigerweise maßstabsgetreu ist;
- Figur 2: eine vergrößerte Darstellung einer ersten Abwandlung eines erfindungsgemäßen Keramik-Metall-Verbundkörpers; und
- Figur 3: eine weitere Darstellung einer weiteren Abwandlung eines erfindungsgemäßen Keramik-Metall-Verbundkörpers.

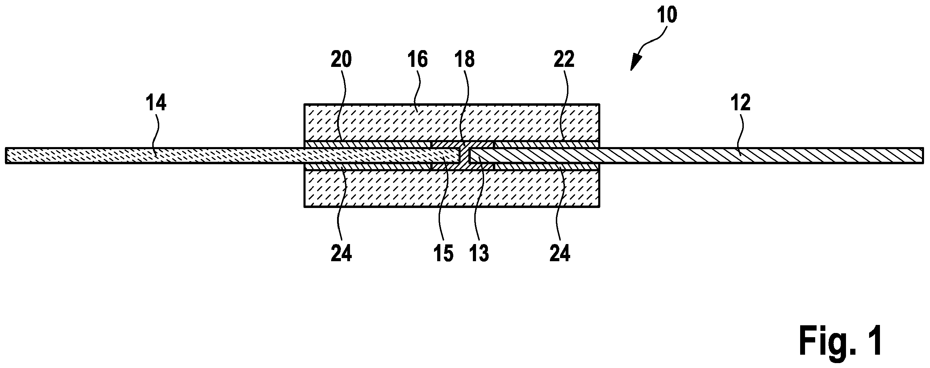

In Fig. 1 ist ein hochtemperaturbeständiger Keramik-Metall-Verbundkörper, der als Zünd- und Überwachungselektrode vorgesehen ist, im Längsschnitt dargestellt und insgesamt mit der Ziffer 10 bezeichnet. Der Verbundkörper 10 weist einen Metallstab 12 aus Kanthal® A-1 (Firma Sandvik) auf, der in Fig. 1 nur abgeschnitten dargestellt ist und der mit einem Keramikstab 14 aus einer elektrisch leitenden Keramik, der die Elektrodenspitze bildet, elektrisch leitend verbunden ist. Der Keramikstab 14 besteht aus einer SiSiC-Keramik.

Das Ende 13 des Metallstabes 12 und das zugeordnete Ende 15 des Keramikstabes 14 ist innerhalb einer Keramikhülse 16 aus Aluminiumoxid aufgenommen und mittels eines elektrisch leitenden Materials 18 innerhalb der Keramikhülse 16 fixiert. Das elektrisch leitende Material 18 ist ein elektrisch leitfähiger Kleber oder ein Coating. Hierzu wird bevorzugt ein von der Fa. Aremco Products Inc., 707 Executive Blvd., Valley Cottage, NY 10989, USA, angebotener, anorganischer, elektrisch leitender Kleber verwendet, der unter der Bezeichnung Pyro-DuctTM 597-C vertrieben wird.

Es handelt sich hierbei um einen anorganischen Einkomponentenkleber, der hervorragend haftet und bei Raumtemperatur aushärtet. Dieser enthält hochreine Silberpartikel mit einer Partikelgröße von <20 Mikrometer (D50). Bei einer Betriebstemperatur von 950°C erweicht der Kleber und geht in einen pastösen, teigigen Zustand über.

Die zwischen der Keramikhülse 16 und dem Metallstab 12 bzw. dem Keramikstab 14 verbleibenden Spalte 20, 22 sind gemäß Fig. 1 zusätzlich mit einem anorganischen Material 24 verschlossen.

Auch hierbei handelt es sich um einen anorganischen Kleber.

Hierzu wird bevorzugt der von Aremco Products unter dem Handelsnamen Aremco CeramabondTM670 vertriebene hochtemperaturbeständige Kleber verwendet, der bis zu einer maximalen Betriebstemperatur von 1650°C verwendbar ist.

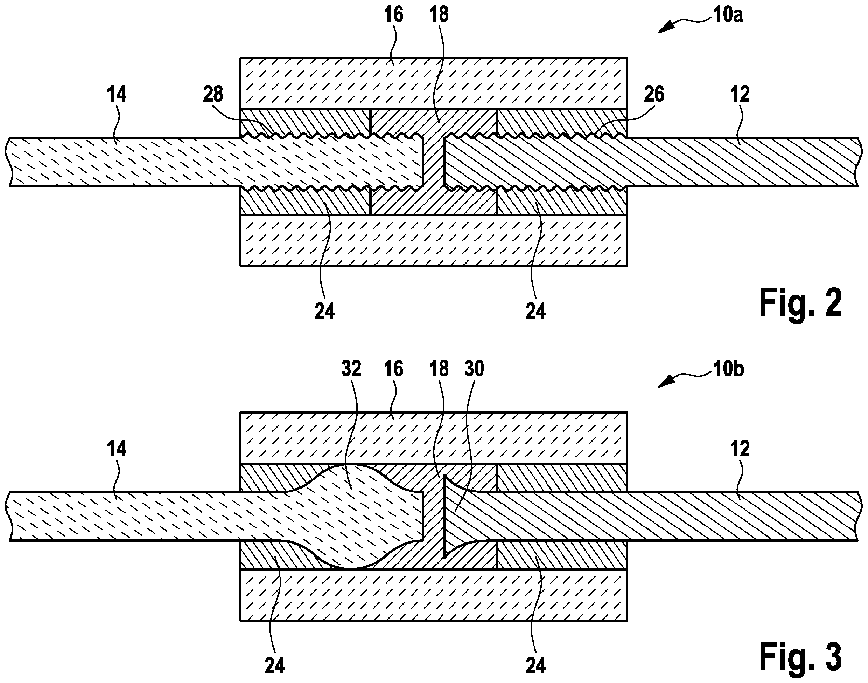

Um die Haftung zwischen dem Metallstab 12 und dem elektrisch leitfähigen Material 18 in Form des Klebers zu verbessern, können gemäß Fig. 2 an der Außenoberfläche des Metallstabes 12 im von der Keramikhülse 16 umschlossenen Bereich Oberflächenstrukturen 26 etwa in Form von Sicken oder Noppen vorgesehen sein. Bei dem insgesamt mit 10a bezeichneten Verbundkörper ist ferner auch der von der Keramikhülse 16 umschlossene Bereich des elektrischen leitenden Keramikstabes 14 mit entsprechenden Oberflächenstrukturen 28 versehen.

Durch eine derartige Ausgestaltung werden die Haftung und mechanische Beständigkeit der Verbindung deutlich verbessert.

Alternativ oder zusätzlich können im Bereich der Enden von Metallstab 12 und Keramikstab Erweiterungen vorgesehen sein, wie in Fig. 3 beispielhaft anhand des insgesamt mit 10b bezeichneten Verbundkörpers dargestellt. Der Metallstab 12 kann beispielsweise eine annähernd konusförmige Erweiterung 30 an seinem Ende aufweisen. Der Keramikstab 14 kann an seinem Ende beispielsweise eine sickenförmige Erweiterung 32 aufweisen, wobei der Außendurchmesser an dieser Stelle annähernd dem Innendurchmesser der Keramikhülse 16 entsprechen kann.

Auch hierdurch wird der Rückhalt innerhalb der Keramikhülse verbessert. Zusätzlich können die Oberflächenstrukturen beispielsweise gemäß Fig. 2 innerhalb des von der Keramikhülse 16 umschlossenen Bereiches vorgesehen sein.

Durch eine derartige Ausgestaltung der Oberflächen des Metallstabes 12 und des Keramikstabes 14 wird einem Herausfallen bei senkrechter Anordnung des Verbundkörpers 10a bzw. 10b entgegengewirkt.

## Patentansprüche

1. Hochtemperaturbeständiger Keramik-Metall-Verbundkörper, insbesondere Brennerelektrode, insbesondere Zünd- und Überwachungselektrode, mit einem Metallstab (12), der mit einem Keramikstab (14) aus einer elektrisch leitenden Keramik verbunden ist, mit einem isolierenden Keramikkörper (16) in Form einer Keramikhülse, welche von einem Hohlraum durchsetzt ist, der einander zugewandte Enden (13, 15) des Metallstabes (12) und des Keramikstabes (14) zumindest teilweise umschließt, und mit einem elektrisch leitenden Material (18) zur Fixierung des Metallstabes (12) im Keramikkörper (16) und zur elektrisch leitenden Verbindung der Enden (13, 15) des Metallstabes (12) und des Keramikstabes (14), **dadurch gekennzeichnet, dass** das elektrisch leitende Material (18) bei einer Betriebstemperatur im Bereich von 900°C bis 1000°C, insbesondere von 950°C bis 1000°C, insbesondere bei 950°C erweicht ist, vorzugsweise einen pastösen Zustand aufweist.

2. Verbundkörper nach Anspruch 1, **dadurch gekennzeichnet, dass** das elektrisch leitende Material (18) einen elektrisch leitenden Metallzusatz aufweist, der aus der Gruppe ausgewählt ist, die aus Eisen, Gold, Kupfer, Nickel, Silber, Palladium, Platin, Mischungen und Legierungen hiervon besteht.

3. Verbundkörper nach Anspruch 1 oder 2, **dadurch gekennzeichnet, dass** der Metallzusatz in Partikelform zugesetzt ist, vorzugsweise mit einer Partikelgröße D50<200 Mikrometer, weiter bevorzugt mit einer Partikelgröße D50<100 Mikrometer, weiter bevorzugt mit einer Partikelgröße D50<50 Mikrometer, besonders bevorzugt mit einer Partikelgröße D50<20 Mikrometer.

4. Verbundkörper nach Anspruch 3, **dadurch gekennzeichnet, dass** das elektrisch leitende Material (18) einen Metallzusatz von 1 Vol.-% bis 60 Vol.-% aufweist, vorzugsweise von 5 Vol.-% bis 30 Vol.-%.

5. Verbundkörper nach einem der vorhergehenden Ansprüche, **dadurch gekennzeichnet, dass** das elektrisch leitende Material (18) eine Volumenleitfähigkeit von <10⁻² Ωcm aufweist, vorzugsweise von <10⁻³ Ωcm, besonders bevorzugt von 5 x 10⁻⁴ Ωcm bis 10⁻⁴ Ωcm.

6. Verbundkörper nach einem der vorhergehenden Ansprüche, **dadurch gekennzeichnet, dass** das elektrisch leitende Material (18) als anorganischer Kleber oder anorganisches Coating ausgebildet ist.

7. Verbundkörper nach einem der vorhergehenden Ansprüche, **dadurch gekennzeichnet, dass** die Keramikhülse (16) aus einer Aluminiumoxidkeramik oder einer Zirkonoxidkeramik besteht.

8. Verbundkörper nach einem der vorhergehenden Ansprüche, **dadurch gekennzeichnet, dass** das elektrisch leitende Material (18) einen Hohlraum im mittleren Bereich der Keramikhülse (16) zwischen dem Ende (13) des Metallstabes (12) und dem Ende (15) des Keramikstabes (14) ausfüllt, und dass zwischen der Keramikhülse (16) und dem Metallstab (12) und dem Keramikstab (14) an beiden Enden verbleibende Spalte (20, 22) mittels eines anorganischen Materials (24) verschlossen ist.

9. Verbundkörper nach Anspruch 8, **dadurch gekennzeichnet, dass** die Spalte (20, 22) an beiden Enden mittels eines anorganischen Klebers (24) verschlossen ist, der vorzugsweise zumindest bis 1300°C, vorzugsweise zumindest bis 1500°C, besonders bevorzugt zumindest bis 1600°C temperaturbeständig ist.

10. Verbundkörper nach einem der vorhergehenden Ansprüche, **dadurch gekennzeichnet, dass** der Keramikstab (14) und/oder der Metallstab (12) im von der Keramikhülse (16) umschlossenen Bereich zumindest teilweise mit Oberflächenstrukturen (26, 28) versehen ist, insbesondere mit Erhöhungen, Vertiefungen, Zacken, Spitzen, Noppen und/oder Hinterschneidungen versehen ist, wobei die Oberflächenstrukturen (26, 28) vorzugsweise in Radialrichtung eine Ausdehnung von 0,1 bis 2 mm, vorzugsweise von 0,5 bis 1,00 Millimeter aufweisen.

11. Verbundkörper nach einem der vorhergehenden Ansprüche, **dadurch gekennzeichnet, dass** das Ende des Metallstabes (12) und/oder das Ende des Keramikstabes (14) mit einer Erweiterung (30, 32) versehen ist, vorzugsweise mit einer sickenförmigen, konusförmigen oder stufenförmigen Erweiterung versehen ist, wobei die Erweiterung (30, 32) vorzugsweise in Radialrichtung eine Ausdehnung von 0,1 bis 2 mm, vorzugsweise von 0,5 bis 1,00 Millimeter aufweist.

12. Verbundkörper nach einem der vorhergehenden Ansprüche, **dadurch gekennzeichnet, dass** der elektrisch leitende Keramikstab (14) aus einer Oxidkeramik, insbesondere aus der Gruppe der Siliziumkarbide, besteht.

13. Verbundkörper nach einem der vorhergehenden Ansprüche, **dadurch gekennzeichnet, dass** der Metallstab (12) aus einer Heizleiterlegierung, vorzugsweise aus einer Eisen-Chrom-Aluminium-Legierung besteht, besonders bevorzugt aus einer ferritischen Legierung, die etwa 5,6 bis 6 Gew.-% Aluminium und 20 bis 24 Gew.-% Chrom, mit Rest Eisen enthält.

14. Verbundkörper nach einem der vorhergehenden Ansprüche, **dadurch gekennzeichnet, dass** das elektrisch leitende Material (18) bei 950°C eine Viskosität von höchstens 10¹² dPas, weiter bevorzugt von höchstens 10¹⁰ dPas, besonders bevorzugt von höchstens 10⁸ dPas aufweist.

15. Verbundkörper nach einem der vorhergehenden Ansprüche, **dadurch gekennzeichnet, dass** das elektrisch leitende Material (18) bei 950°C eine Viskosität von mindestens 10² dPas, weiter bevorzugt von mindestens 10³ dPas, besonders bevorzugt von mindestens als 10⁴ dPas aufweist.
